# EUROPEAN PATENT APPLICATION

(11) **EP 4 120 533 A1**
(43) Date of publication of application: **18.01.2023**
(21) Application number: 21767742.6
(22) Date of filing: 19.02.2021
(51) Int. Cl.: H02M 3/158, H02M 3/335, H02J 7/10

(54) **POWER CONVERSION CIRCUIT AND CHARGING DEVICE**

(30) Priority: 12.03.2020 CN 202010172611
(71) Applicant: GUANGDONG OPPO MOBILE TELECOMMUNICATIONS CORP., LTD., Dongguan, Guangdong 523860 (CN)
(72) Inventor: JIANG, Senlong, Dongguan, Guangdong 523860 (CN); CHIU, Chih-wei, Dongguan, Guangdong 523860 (CN); ZHANG, Jialiang, Dongguan, Guangdong 523860 (CN); TIAN, Chen, Dongguan, Guangdong 523860 (CN); ZHANG, Jun, Dongguan, Guangdong 523860 (CN)
(74) Representative: Penza, Giancarlo
(86) International application number: PCT/CN2021/076892
(87) International publication number: WO 2021/179888

(57) **Abstract**

A power supply conversion circuit (10) and a charging device (20), the power supply conversion circuit comprising: a first voltage conversion circuit (11) that converts a voltage when the voltage exceeds a preset voltage range and then outputs same; a subsequent stage voltage conversion circuit (12) that receives the voltage and converts same into a target voltage for outputting; and a signal feedback circuit (13) that feeds back a signal to the first voltage conversion circuit (11) according to the target voltage, so that the first voltage conversion circuit (11) is synchronized with the subsequent voltage conversion circuit (12).

## Description

### PRIORITY INFORMATION

This application claims priority and benefit to Chinese patent application No. 202010172611.X, filed to China National Intellectual Property Administration on March 12, 2020, and the entire content of which is hereby incorporated by reference.

### TECHNICAL FIELD

The disclosure relates to the field of power technologies, and more particularly to a power supply conversion circuit and a charging device.

### BACKGROUND

With the development of charging technology, terminal devices have higher and higher requirements for charging speed. An adapter for charging the terminal device usually includes a power supply conversion circuit to convert an alternating current (AC) power input to the adapter into a direct current (DC) power to thereby charge the terminal device to be charged.

### SUMMARY

Embodiments of the disclosure provide a power supply conversion circuit and a charging device, which can improve the efficiency of power conversion.

In a first aspect, an embodiment of the disclosure provides a power supply conversion circuit, including: a first voltage conversion circuit, a post-stage voltage conversion circuit, and a signal feedback circuit. The first voltage conversion circuit is connected to the post-stage voltage conversion circuit, and the signal feedback circuit is connected to the first voltage conversion circuit and the post-stage voltage conversion circuit individually.

The first voltage conversion circuit is configured to convert, in response to a voltage input to the first voltage conversion circuit exceeds a preset voltage range, the voltage input to the first voltage conversion circuit to be within the preset voltage range to obtain a converted voltage and output the converted voltage to the post-stage voltage conversion circuit.

The post-stage voltage conversion circuit is configured to convert the converted voltage input to the post-stage voltage conversion circuit into a target voltage and output the target voltage.

The signal feedback circuit is configured to feed back, based on output of the post-stage voltage conversion circuit, information to the first voltage conversion circuit, to thereby make the first voltage conversion circuit be synchronized with the post-stage voltage conversion circuit.

In a second aspect, an embodiment of the disclosure provides a charging device, including a power access port, a charging interface, and a power supply conversion circuit. The power access port is configured to input an alternating current (AC) power. The power supply conversion circuit includes a first voltage conversion circuit, a post-stage voltage conversion circuit, and a signal feedback circuit. The first voltage conversion circuit is connected to the post-stage voltage conversion circuit, and the signal feedback circuit is connected to the first voltage conversion circuit and the post-stage voltage conversion circuit individually. The first voltage conversion circuit is configured to convert, in response to a voltage input to the first voltage conversion circuit exceeds a preset voltage range, the voltage input to the first voltage conversion circuit to be within the preset voltage range to obtain a converted voltage and output the converted voltage to the post-stage voltage conversion circuit. The post-stage voltage conversion circuit is configured to convert the converted voltage input to the post-stage voltage conversion circuit into a target voltage and output the target voltage. The signal feedback circuit is configured to feed back, based on output of the post-stage voltage conversion circuit, information to the first voltage conversion circuit, to thereby make the first voltage conversion circuit be synchronized with the post-stage voltage conversion circuit. The charging interface is configured to output the target voltage output from the post-stage voltage conversion circuit to thereby charge a device to be charged.

Additional aspects and advantages of the embodiments of the disclosure will be given in part in the following description, and some of which will become apparent from the following description, or will be known through practice of the disclosure.

### BRIEF DESCRIPTION OF DRAWINGS

The above-mentioned and/or additional aspects and advantages of the disclosure will become apparent and easy to understand from the description of embodiments in combination with the following accompanying drawings, wherein:
FIG. 1 illustrates a schematic structural diagram of a power supply conversion circuit according to an embodiment of the disclosure.
FIG. 2 illustrates a schematic structural diagram of a power supply conversion circuit according to another embodiment of the disclosure.
FIG. 3 illustrates a schematic structural diagram of a power supply conversion circuit according to still another embodiment of the disclosure.
FIG. 4 illustrates a schematic structural diagram of a power supply conversion circuit according to even still another embodiment of the disclosure.
FIG. 5 illustrates a schematic waveform diagram of a pulsating direct current (DC) voltage according to an embodiment of the disclosure.
FIG. 6 illustrates a schematic waveform diagram of a pulsating DC voltage according to another embodiment of the disclosure.
FIG. 7 illustrates a schematic structural diagram of a charging device according to an embodiment of the disclosure.

### DETAILED DESCRIPTION OF EMBODIMENTS

Illustrative embodiments will be described more fully with reference to the accompanying drawings. However, the illustrative embodiments may be implemented in various forms, and should not be construed as limited to the embodiments set forth herein; rather, providing these embodiments allows the disclosure to be more comprehensive and complete, and comprehensively convey the concept of the illustrative embodiments to those skilled in the art. The accompanying drawings are only schematic illustrations of the disclosure and are not necessarily drawn to scale. Identical reference numerals in the drawings represent the same or similar parts, and thus repetitive descriptions thereof will be omitted.

In addition, the described features, structures, or characteristics may be combined in any suitable manner in one or more embodiments. In the following description, many specific details are provided to give a full understanding of the embodiments of the disclosure. However, those skilled in the art will realize that the technical solutions of the disclosure may be practiced omitting one or more of the specific details, or with other methods, components, devices, steps, etc. In other cases, well-known structures, methods, devices, implementations, materials, or operations are not shown or described in detail to avoid obscuring aspects of the disclosure.

In the disclosure, unless otherwise expressly specified and limited, terms "disposed", "connected", "coupled", "fixed" and other terms should be construed in a broad sense, for example, may be fixedly connected, removably connected, or integrally formed; it may be mechanical connected, electrical connected, or mutual communication; it may be directly or indirectly connected through an intermediate medium, and it may be internal connection of two components or interaction relationship between two components. For those skilled in the art, specific meanings of the above terms in the disclosure can be understood according to the specific circumstances.

Moreover, terms "first" and "second" are only used for descriptive purposes and cannot be understood as indicating or implying relative importance or implicitly indicating the number of indicated technical features. Thus, the features defined with "first" and "second" may explicitly or implicitly include one or more of the features. In the description of the disclosure, "multiple" means at least two, such as two, three, etc., unless otherwise expressly and specifically defined.

A power supply conversion circuit of an embodiment of the disclosure includes a first voltage conversion circuit, a post-stage voltage conversion circuit, and a signal feedback circuit. The first voltage conversion circuit is connected to the post-stage voltage conversion circuit, and the signal feedback circuit is connected to the first voltage conversion circuit and the post-stage voltage conversion circuit individually. The first voltage conversion circuit is used to convert a voltage input to the first voltage conversion circuit to be within a preset voltage range when the voltage input to the first voltage conversion circuit exceeds the preset voltage range to thereby obtain a converted voltage, and output the converted voltage to the post-stage voltage conversion circuit. The post-stage voltage conversion circuit is used to convert the converted voltage input to the post-stage voltage conversion circuit into a target voltage and output the target voltage. The signal feedback circuit is used to feed back information to the first voltage conversion circuit based on output of the post-stage voltage conversion circuit, so as to make the first voltage conversion circuit be synchronized with the post-stage voltage conversion circuit.

In some embodiments, the power supply conversion circuit further includes a rectifier circuit, and an output end of the rectifier circuit is connected to an input end of the first voltage conversion circuit. The rectifier circuit is used to convert an alternating current (AC) voltage input to the rectifier circuit into a pulsating direct current (DC) voltage, and output the pulsating DC voltage to the first voltage conversion circuit.

In some embodiments, the post-stage voltage conversion circuit includes a transformer and a second voltage conversion circuit. A primary winding of the transformer is connected to an output end of the first voltage conversion circuit, and a secondary winding of the transformer is connected to an input end of the second voltage conversion circuit. The transformer is used to couple the converted voltage, input from the first voltage conversion circuit to the post-stage voltage conversion circuit, from the primary winding to the secondary winding. The second voltage conversion circuit is used to convert a voltage output from the secondary winding into the target voltage and output the target voltage.

In some embodiments, the second voltage conversion circuit is specifically used to receive feedback information of a device to be charged connected to the power supply conversion circuit, and convert the voltage output from the secondary winding into the target voltage based on the feedback information.

In some embodiments, the feedback information includes at least one selected from the group consisting of charging stage information of the device to be charged, battery level information of the device to be charged, battery temperature of the device to be charged, a charging voltage and a charging current requested by the device to be charged, a voltage adjustment signal, and a current adjustment signal.

In some embodiments, the first voltage conversion circuit includes a metal-oxide-semiconductor (MOS) transistor as a unidirectional conducting device. The first voltage conversion circuit further includes a trigger circuit used to control on and off of the MOS transistor. The trigger circuit is specifically used to control the MOS transistor to be on or off based on the information fed back by the signal feedback circuit, so as to make the first voltage conversion circuit be synchronized with the post-stage voltage conversion circuit.

In some embodiments, the power supply conversion circuit further includes a first capacitor, a first end of the first capacitor is connected to the input end of the first voltage conversion circuit, a second end of the first capacitor is grounded, and the first capacitor is used to boost the voltage on the input end of the first voltage conversion circuit.

In some embodiments, the power supply conversion circuit further includes a second capacitor, the second capacitor is connected a node between the secondary winding of the transformer and the second voltage conversion circuit, and the second capacitor is used to boost the voltage on an input end of the second voltage conversion circuit.

In some embodiments, the first voltage conversion circuit includes a voltage boost convertor, the voltage boost convertor is used to convert a voltage output from a rectifier circuit to the first voltage conversion circuit to be within the preset voltage range when the voltage output from the rectifier circuit to the first voltage conversion circuit is less than or equal to a lower limit value of the preset voltage range to thereby obtain a boosted voltage as the converted voltage, and output the boosted voltage to the post-stage voltage conversion circuit.

In some embodiments, the voltage boost convertor includes one or more selected from a BOOST circuit, a BUCK/BOOST circuit, a charge pump circuit, and a Cuk circuit.

In some embodiments, the first voltage conversion circuit further includes a voltage buck convertor, the voltage buck convertor is used to convert a voltage output from a rectifier circuit to the first voltage conversion circuit to the preset voltage range when the voltage output from the rectifier circuit to the first voltage conversion circuit is greater than or equal to an upper limit value of the preset voltage range to thereby obtain a bucked voltage as the converted voltage, and output the bucked voltage to the post-stage voltage conversion circuit.

In some embodiments, the voltage buck convertor includes one or more selected from a BUCK circuit, a BUCK/BOOST circuit, a charge pump circuit, and a Cuk circuit.

In some embodiments, the voltage boost convertor and the voltage buck convertor are connected in parallel.

A charging device of an embodiment of the disclosure includes a power access port, a charging interface, and a power supply conversion circuit. The power access port is configured to input an AC power. The power supply conversion circuit includes: a first voltage conversion circuit, a post-stage voltage conversion circuit, and a signal feedback circuit. The first voltage conversion circuit is connected to the post-stage voltage conversion circuit, and the signal feedback circuit is connected to the first voltage conversion circuit and the post-stage voltage conversion circuit individually. The first voltage conversion circuit is used to convert a voltage input to the first voltage conversion circuit to be within a preset voltage range when the voltage input to the first voltage conversion circuit exceeds the preset voltage range to thereby obtain a converted voltage, and output the converted voltage to the post-stage voltage conversion circuit. The post-stage voltage conversion circuit is used to convert the converted voltage input to the post-stage voltage conversion circuit into a target voltage and output the target voltage. The signal feedback circuit is used to feed back information to the first voltage conversion circuit based on output of the post-stage voltage conversion circuit, so as to make the first voltage conversion circuit be synchronized with the post-stage voltage conversion circuit.

In some embodiments, the power supply conversion circuit further includes a rectifier circuit, and an output end of the rectifier circuit is connected to an input end of the first voltage conversion circuit. The rectifier circuit is used to convert an AC voltage input to the rectifier circuit into a pulsating DC voltage and output the pulsating DC voltage to the first voltage conversion circuit.

In some embodiments, the post-stage voltage conversion circuit includes a transformer and a second voltage conversion circuit. A primary winding of the transformer is connected to an output end of the first voltage conversion circuit, and a secondary winding of the transformer is connected to an input end of the second voltage conversion circuit. The transformer is used to couple the converted voltage, input from the first voltage conversion circuit to the post-stage voltage conversion circuit, from the primary winding to the secondary winding. The second voltage conversion circuit is used to convert a voltage output from the secondary winding into the target voltage and output the target voltage.

In some embodiments, the second voltage conversion circuit is specifically configured to receive feedback information of a device to be charged connected to the power supply conversion circuit, and convert the voltage output from the secondary winding into the target voltage based on the feedback information.

In some embodiments, the feedback information includes at least one selected from the group consisting of charging stage information of the device to be charged, battery level information of the device to be charged, battery temperature of the device to be charged, a charging voltage and a charging current requested by the device to be charged, a voltage adjustment signal, and a current adjustment signal.

In some embodiments, the first voltage conversion circuit comprises a MOS transistor as a unidirectional conducting device. The first voltage conversion circuit further includes a trigger circuit used to control on and off of the MOS transistor. The trigger circuit is specifically configured to control the MOS transistor to be on or off based on the information fed back by the signal feedback circuit, so as to make the first voltage conversion circuit be synchronized with the post-stage voltage conversion circuit.

In some embodiments, the power supply conversion circuit further includes a first capacitor, a first end of the first capacitor is connected to an input end of the first voltage conversion circuit, a second end of the first capacitor is grounded, and the first capacitor is used to boost the voltage on the input end of the first voltage conversion circuit.

In some embodiments, the power supply conversion circuit further includes a second capacitor, the second capacitor is connected a node between the secondary winding of the transformer and the second voltage conversion circuit, and the second capacitor is used to boost the voltage on an input end of the second voltage conversion circuit.

In some embodiments, the first voltage conversion circuit includes a voltage boost convertor, the voltage boost convertor is used to convert a voltage output from the rectifier circuit to the first voltage conversion circuit to be within the preset voltage range when the voltage output from the rectifier circuit to the first voltage conversion circuit is less than or equal to a lower limit value of the preset voltage range to thereby obtain a boosted voltage as the converted voltage, and output the boosted voltage to the post-stage voltage conversion circuit.

In some embodiments, the voltage boost convertor includes one or more selected from a BOOST circuit, a BUCK/BOOST circuit, a charge pump circuit, and a Cuk circuit.

In some embodiments, the first voltage conversion circuit further includes a voltage buck convertor, the voltage buck convertor is used to convert the voltage output from the rectifier circuit to the first voltage conversion circuit to the preset voltage range when the voltage output from the rectifier circuit to the first voltage conversion circuit is greater than or equal to an upper limit value of the preset voltage range to thereby obtain a bucked voltage as the converted voltage, and output the bucked voltage to the post-stage voltage conversion circuit.

In some embodiments, the voltage buck convertor includes one or more selected from a BUCK circuit, a BUCK/BOOST circuit, a charge pump circuit, and a Cuk circuit.

In some embodiments, the voltage boost convertor and the voltage buck convertor are connected in parallel.

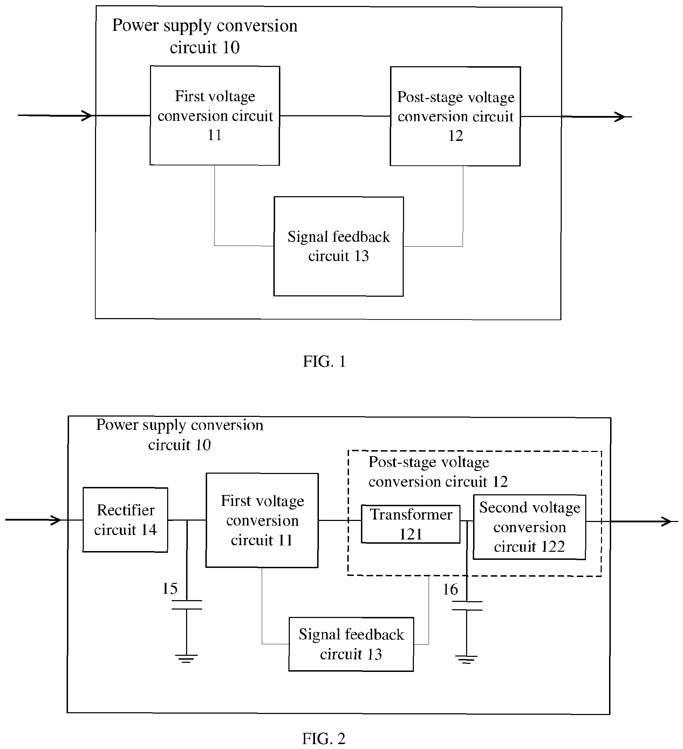

FIG. 1 illustrates a schematic structural diagram of a power supply conversion circuit according to an embodiment of the disclosure. As shown in FIG. 1, a power supply conversion circuit 10 includes a first voltage conversion circuit 11, a post-stage voltage conversion circuit 12, and a signal feedback circuit 13. The first voltage conversion circuit 11 is connected to the post-stage voltage conversion circuit 12, and the signal feedback circuit 13 is connected to the first voltage conversion circuit 11 and the post-stage voltage conversion circuit 12 individually.

In order to improve charging rate and reduce heat generated by an adapter during charging, how to improve energy transfer efficiency of the power supply conversion circuit has become an urgent problem to be solved.

The embodiment of the disclosure provides the signal feedback circuit, so that a signal on a secondary side of the transformer in the power supply conversion circuit may be fed back to a primary side, and the on and off of switches on the primary side and the secondary side are synchronized, so as to improve the power conversion efficiency.

Among them, the first voltage conversion circuit 11 is used to convert a voltage input to the first voltage conversion circuit 11 to be within a preset voltage range when the voltage input to the first voltage conversion circuit 11 exceeds the preset voltage range to thereby obtain a converted voltage, and output the converted voltage to the post-stage voltage conversion circuit 12 The post-stage voltage conversion circuit 12 is used to convert the converted voltage input to the post-stage voltage conversion circuit 12 into a target voltage and output the target voltage. The signal feedback circuit 13 is used to feed back information to the first voltage conversion circuit 11 based on output of the post-stage voltage conversion circuit 12, so as to make the first voltage conversion circuit 11 be synchronized with the post-stage voltage conversion circuit 12.

In the embodiment of the disclosure, the power supply conversion circuit 10 may be equipped in a charging device, and the charging device may be an adapter for charging the device to be charged. Specifically, the device to be charged may be an intelligent terminal or a mobile terminal device, which is equipped with a battery power supply system. The device to be charged may also include, but is not limited to, rechargeable electronic devices with a charging function, such as notebook computers, mobile phones, e-book readers, intelligent wearable devices, mobile power supplies (such as charging po and travel charger), electronic cigarettes, wireless mice, wireless keyboards, wireless headsets, Bluetooth speakers, etc.

In the embodiment of the disclosure, input of the first voltage conversion circuit 11 may be a pulsating DC voltage. Pulsating DC voltage refers to a continuous DC with pulsating changes in current, that is, a DC with varying magnitude. For example, the pulsating DC voltage may be a "steamed bread wave"(also referred to as full-wave rectified wave) obtained by AC is rectified by the rectifier circuit. When the voltage input to the first voltage conversion circuit 11 exceeds the preset voltage range, the first voltage conversion circuit 11 converts the input voltage to be within the preset voltage range. The lower limit value of the preset voltage range is greater than the minimum operating voltage of the post-stage voltage conversion circuit 12. Therefore, through the processing of the first voltage conversion circuit 11, an operating deadband (also referred to as an operation dead zone) of the post-stage voltage conversion circuit 12 can be eliminated or reduced, so as to ensure normal operation of the post-stage voltage conversion circuit 12.

On the other hand, the output end of the post-stage voltage conversion circuit 12 may be connected to the device to be charged, and the output target voltage may be adjusted directly according to the feedback information of the device to be charged, that is, the charging voltage output from the power supply conversion circuit 10 to the device to be charged may be adjusted to meet a charging demand of the device to be charged. Compared with related art, in the related art, the information fed back by the device to be charged or charging parameters required by the device to be charged need to be fed back to the primary side of the transformer in the power supply conversion circuit, and the output voltage of the power supply conversion circuit is adjusted through the primary side. Since a feedback path of the signal fed back to the primary side is long and the real-time performance is poor, the solution of the embodiment of the disclosure can improve the real-time performance of the adjustment.

In addition, in the embodiment of the disclosure, the signal feedback circuit 13 feeds back information to the first voltage conversion circuit 11 according to the output of the post-stage voltage conversion circuit 12, so that the switching signal of the first voltage conversion circuit 11 is synchronized with that of the post-stage voltage conversion circuit 12. In this situation, when the primary switching energy of the transformer in the power supply conversion circuit is large, the secondary of the transformer also obtains large energy, and when the primary is closed and there is no energy, the secondary is also closed and does not require large energy. Therefore, the input signal can be ensured to be clean, multiple harmonic noise due to load and switch changes will not be generated, the problem of electromagnetic interference (EMI) and the like can be reduced, the requirements for input capacitance can also be reduced, and the power conversion efficiency can be further improved.

As shown in FIG. 2, FIG. 2 illustrates a schematic structural diagram of a power supply conversion circuit 10 according to another embodiment of the disclosure. The power supply conversion circuit 10 may further include a rectifier circuit 14, and an output end of the rectifier circuit 14 is connected to an input end of the first voltage conversion circuit 11. The rectifier circuit 14 is used to convert an AC voltage input to the rectifier circuit 14 into a pulsating DC voltage and output the pulsating DC voltage to the first voltage conversion circuit 11.

Specifically, the post-stage voltage conversion circuit 12 may include a transformer 121 and a second voltage conversion circuit 122. A primary winding of the transformer 121 is connected to an output end of the first voltage conversion circuit 11, and a secondary winding of the transformer 121 is connected to an input end of the second voltage conversion circuit 122. The transformer 121 is used to couple the voltage, input from the first voltage conversion circuit 11 to the post-stage voltage conversion circuit 12, from the primary winding to the secondary winding. The second voltage conversion circuit 122 is used to convert the voltage output from the secondary winding into a target voltage and output the target voltage.

Specifically, the second voltage conversion circuit 122 is further used to receive feedback information of the device to be charged connected to the power supply conversion circuit 10, and convert the voltage output from the secondary winding into the target voltage according to the feedback information. The target voltage is used to be output to the device to be charged to charge or supply power to the device to be charged.

As an optional embodiment, the feedback information includes at least one selected from the group consisting of charging stage information of the device to be charged, battery level information of the device to be charged, battery temperature of the device to be charged, a charging voltage and a charging current requested by the device to be charged, a voltage adjustment signal, and a current adjustment signal. The voltage adjustment signal may be a signal for boosting or bucking the voltage, and the current adjustment signal may be a signal for increasing or decreasing the current.

For the charging stage information, for example, the charging process of lithium-ion battery may be commonly divided into four stages including trickle charging, constant current charging, constant voltage charging, and charging termination.

As an optional embodiment, the signal feedback circuit 13 may further used to collect an input voltage of the second voltage conversion circuit 122, output feedback information to the first voltage conversion circuit 11 according to the input voltage of the second voltage conversion circuit 122, and the first voltage conversion circuit 11 may adjust its output voltage according to the feedback information, thus ensuring that the input voltage of the second voltage conversion circuit 122 is within the operable voltage range or the operating voltage range with higher efficiency of the second voltage conversion circuit 122.

As an optional embodiment, the second voltage conversion circuit 122 may include a control module for determining the target voltage according to the feedback information and controlling the second voltage conversion circuit 122 to output the target voltage.

As an optional embodiment, the first voltage conversion circuit 11 may include a MOS transistor as a unidirectional conduction device, and the first voltage conversion circuit 11 may further include a trigger circuit for controlling on and off of the MOS transistor. The trigger circuit is specifically used to control the MOS transistor to be on or off according to the information fed back by the signal feedback circuit 13, so as to make the first voltage conversion circuit 11 be synchronized with the post-stage voltage conversion circuit 13. Thus, the primary side and secondary side of the transformer are synchronized. Compared with the diode used in the unidirectional conduction device, it saves the waste of 0.7 V voltage drop on the diode, improves the working frequency, and further improves the power conversion efficiency.

As an optional embodiment, the power supply conversion circuit 10 may further include a first capacitor 15, a first end of the first capacitor is connected to an input end of the first voltage conversion circuit 11, a second end of the first capacitor is grounded, and the first capacitor 15 is used to boost the voltage on the input end of the first voltage conversion circuit 11.

The first capacitor 15 boosts the voltage of the input end of the first voltage conversion circuit 11 by energy storage, thereby supporting the stability of the operation of the first voltage conversion circuit 11. Since the voltage of the input end of the first voltage conversion circuit 11 is boosted, the voltage output from the output end of the first voltage conversion circuit 11 is boosted, which is conducive to stabilizing the input voltage of the primary winding of the transformer 121 above a fixed value, and reducing the deadband of transformer 121.

As an optional embodiment, the power supply conversion circuit 10 may further include a second capacitor 16, the second capacitor is connected to a node between the secondary winding of the transformer and the second voltage conversion circuit 122, and the second capacitor 16 is used to boost the voltage on the input end of the second voltage conversion circuit 122.

The second capacitor 16 can ensure that the pulsating DC voltage input to the second voltage conversion circuit 122 is not too low, thereby ensuring the normal operation of the second voltage conversion circuit 122.

The technical solution according to the embodiment of the disclosure can realize the miniaturization of the charging device. Compared with setting a filter circuit after the rectifier circuit 14 to smooth the output voltage of the rectifier circuit 14, the filter circuit requires an inductor having a large inductance value and a capacitor having a large capacitance value, so that the size of the inductor and the capacitor in the filter circuit is large. In the embodiment of the disclosure, the first voltage conversion circuit is used to adjust the output voltage of the rectifier circuit 14, and an inductor with a small inductance value and a capacitor with a small capacitance value can be used, which is beneficial to reducing the size of the inductor and the capacitor, thereby reducing the size of the charging device.

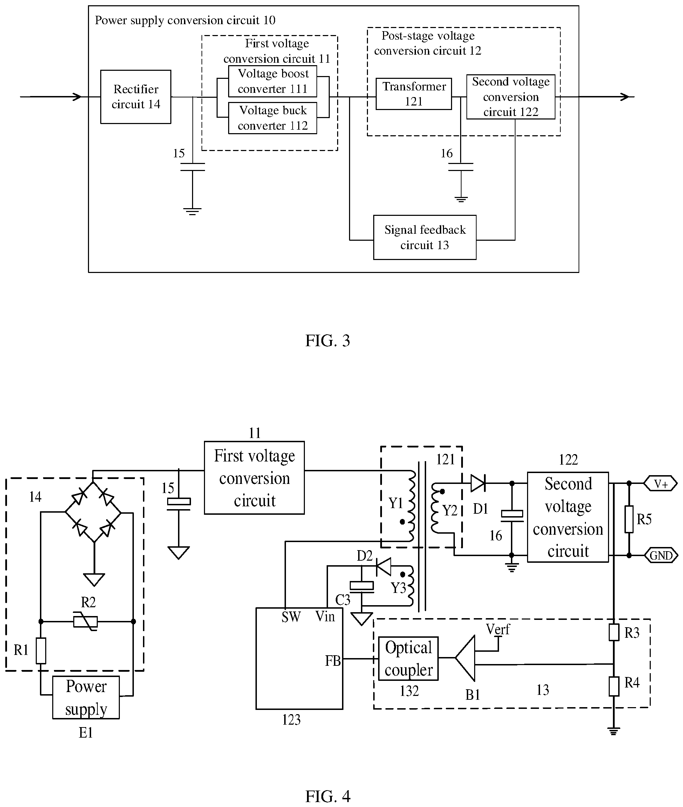

FIG. 3 illustrates a schematic structural diagram of a power supply conversion circuit 10 according to still another embodiment of the disclosure. As shown in FIG. 3, the first voltage conversion circuit 11 includes a voltage boost convertor 111, the voltage boost convertor is used to convert the voltage output from the rectifier circuit 14 to the first voltage conversion circuit 11 to be within the preset voltage range when the voltage output from the rectifier circuit 14 to the first voltage conversion circuit 11 is less than or equal to a lower limit value of the preset voltage range to thereby obtain a boosted voltage as the converted voltage and output the boosted voltage to the post-stage voltage conversion circuit 12.

As an optional embodiment, the voltage boost convertor 111 may include one or more selected from a BOOST circuit, a BUCK/BOOST circuit, a charge pump circuit, and a Cuk circuit.

As an optional embodiment, the first voltage conversion circuit 11 may further include a voltage buck convertor 112, the voltage buck convertor is used to convert the voltage output from the rectifier circuit 14 to the first voltage conversion circuit 11 to be within the preset voltage range when the voltage output from the rectifier circuit 14 to the first voltage conversion circuit 11 is greater than or equal to an upper limit value of the preset voltage range to thereby obtain a bucked voltage as the converted voltage, and output the bucked voltage to the post-stage voltage conversion circuit 12.

As an optional embodiment, the voltage buck convertor 112 may include one or more selected from a BUCK circuit, a BUCK/BOOST circuit, a charge pump circuit, and a Cuk circuit.

As an optional embodiment, the voltage boost convertor 111 and the voltage buck convertor 112 are connected in parallel. The first voltage conversion circuit 11 may include a control circuit for controlling the operation of the voltage boost convertor 111 and the voltage buck convertor 112 individually, that is, controlling the voltage boost convertor 111 to operate when the voltage input to the first voltage conversion circuit 11 is lower than the lower limit value of the preset voltage range, and controlling the voltage buck convertor 112 to operate when the voltage input to the first working voltage conversion circuit 11 is greater than the upper limit value of the preset voltage range, and thus the voltage input to the first voltage conversion circuit 11 is converted to be within the preset voltage range.

It can be understood that the second voltage conversion circuit 122 may also include a voltage boost convertor and/or a voltage buck convertor. The functions, connection methods, and other related implementations of the voltage boost convertor and/or the voltage buck convertor can refer to the above description, which is not be repeated here.

FIG. 4 illustrates a schematic structural diagram of a power supply conversion circuit 10 according to even still another embodiment of the disclosure. As shown in FIG. 4, the post-stage voltage conversion circuit 12 may include an AC-DC power management chip 123, the AC-DC power management includes a switch control terminal SW, a feedback terminal FB, and a power supply terminal Vin. The first end of the primary winding of the transformer 121 is connected to the output end of the first voltage conversion circuit 11, and the second end of the primary winding is connected to the switch control terminal SW of the AC-DC power management chip 123. The output end of the signal feedback circuit 13 is connected to the feedback terminal FB of the AC-DC power management chip 123. A winding may be separately led out from the primary side of the transformer 121 and connected to the power supply terminal Vin of the AC-DC power management chip 123 to supply power to the AC-DC power management chip 123.

In this embodiment, the AC-DC power management chip 123 integrates a switching tube electrically connected to the primary winding of the transformer 121 and a drive circuit for driving the switching tube to turn on and off. By controlling the on or off of the switching tube, the timing of power transmission from the primary winding of transformer 121 to the secondary winding is controlled. The frequency of the switching tube is high (usually more than 100k), so that the voltage on the primary winding of transformer 121 presents a pulse square wave through the fast switching of the switching tube. The secondary winding of transformer 121 outputs a constant voltage, and the specific voltage value is determined by the frequency of the output signal of the switch control terminal SW of the AC-DC power management chip 123. In another embodiment, the switching tube may also exist independently of the AC-DC power management chip 123.

The signal feedback circuit 13 is used to establish feedback between the secondary winding of the transformer 121 and the AC-DC power management chip 123, so that the AC-DC power management chip 123 can adjust the switching frequency of the switching tube, so as to achieve the purpose that the secondary switching signal is synchronized with the primary switching signal. In an embodiment, the transformer 121 includes a primary winding Y1 and a secondary winding Y2. A separate winding Y3 is disposed on the primary winding side as a feedback winding. Through electromagnetic induction, a voltage signal of the secondary winding Y2 of the transformer is obtained and input to the AC-DC power management chip 123 to assist the AC-DC power management chip 123 in implementing voltage control. Optionally, the feedback winding may be provided with a diode D2 and a capacitor C3 to obtain a more accurate feedback signal.

In another embodiment, the signal feedback circuit 13 may include an isolated signal transmission chip, such as an optical coupler 132. Optionally, the isolated signal transmission chip may also be a high-speed transmission chip capable of transmitting a switching synchronization signal with a higher frequency, such as a Keyssa chip. As shown in the FIG.4, as an optional embodiment, resistors are used for voltage division on the secondary output side, the voltage feedback signal and/or switching synchronization signal are transmitted back through a comparator B1, a resistor R3, a resistor R4, and the optical coupler 132. It can be understood that the comparator B1 is used to convert the received signal into a binary signal, so as to use the optical coupler for transmission. When the isolated signal transmission chip adopts other types of chips and circuits, the comparator B 1 may be omitted and an analog signal may be directly input to the isolated signal transmission chip.

Specifically, the rectifier circuit 14 may include a rectifier bridge U1, a resistor R1, and a varistor R2. After a power supply E1 provides an AC signal, the steamed bread wave is output after passing through the rectifier bridge U1. The voltage amplitude of the steamed bread wave increases after passing through the first capacitor 15, and at the same time, the lowest voltage is raised, so that the voltage amplitude of the steamed bread wave is within the working voltage range of the first voltage conversion circuit 11, thereby ensuring the stable output of the first voltage conversion circuit 11.

Alternatively, a diode D1 may be disposed at a node between the secondary winding of transformer 121 and the second voltage conversion circuit 122, and the output end of the second voltage conversion circuit 122 may be provided with a resistor R5 to further improve the stability of the voltage output to the device to be charged.

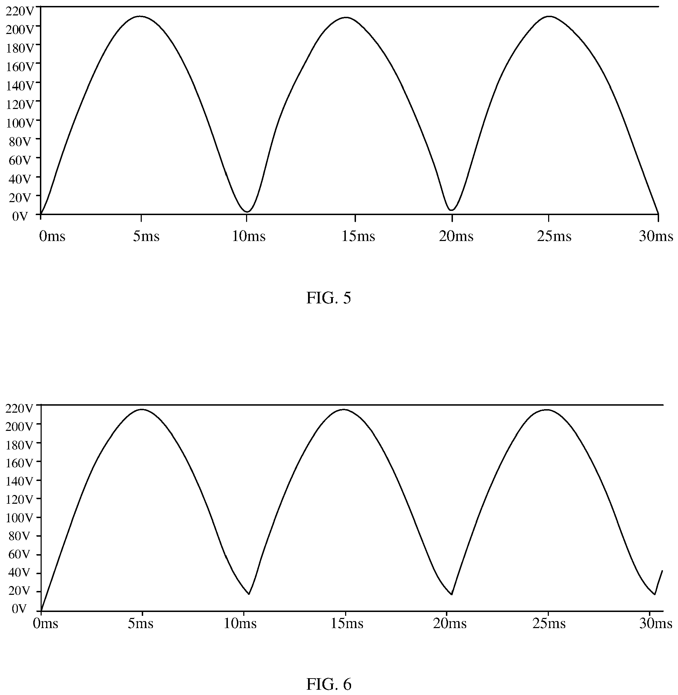

Take the power supply conversion circuit 10 shown in FIG. 4 as an example, in which the power E1 provides 220 V AC voltage, and a sine wave of the AC voltage is output to be the steamed bread wave (i.e., a pulsating DC voltage signal) after passing through the rectifier circuit 14. As shown in FIG. 5, the lowest point of the voltage amplitude approaches 0 V, the lowest voltage is raised after passing through the first capacitor 15, and an output waveform is shown in FIG. 6. For example, when an output peak of load power is 120 watts (W) and an input capacitance of the first capacitor 15 is 100 microfarads (µF), the operation of the first voltage conversion circuit can be effectively supported. For example, if the minimum voltage of the steamed bread wave is raised to 4 V, the first voltage conversion circuit with a minimum operating voltage of not less than 4 V can be used.

It should be noted that the resistors R4 and R3 may be variable resistors. A resistance ratio of R4 and R3 is controlled by adjusting resistance values of R4 and R3, so as to adjust the output voltage on the secondary winding.

It can be understood that the stable operation of the first voltage conversion circuit 11 can stabilize the voltage applied to the primary winding of the transformer 121, so as to stabilize the output voltage induced by the secondary winding without changing from peak to trough with the AC signal, thereby avoiding the deadband of the output of the transformer and making the power supply conversion circuit 10 work stably.

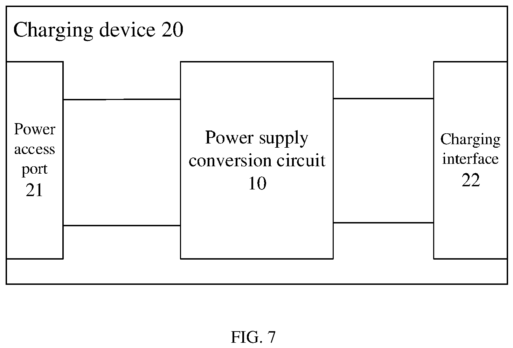

FIG. 7 illustrates a schematic structural diagram of a charging device 20 according to an embodiment of the disclosure. As shown in FIG. 7, the charging device 20 includes a power access port 21, a charging interface 22, and the power supply conversion circuit 10 as described in any of the above embodiments. The power access port 21 is used to input an AC, and the target voltage output from the post-stage voltage conversion circuit in the power supply conversion circuit 10 is used to be output from the charging interface 22 for charging the device to be charged.

It should be noted that the above drawings are only schematic illustrations of processings involved in methods according to illustrative embodiments of the disclosure and are not intended to limit the disclosure. It is readily understood that the processings shown in the above drawings do not imply or limit a chronological order of these processings. In addition, it is also readily understood that these processings may be performed, for example, in multiple modules, either synchronously or asynchronously.

The above description has specifically shown and described illustrative embodiments of the disclosure. It should be understood that the disclosure is not limited to the detailed structures, arrangements, or implementation methods described herein; and on the contrary, the disclosure is intended to cover various modifications and equivalent arrangements included within the spirit and scope of the appended claims.

## Claims

1. A power supply conversion circuit, comprising: a first voltage conversion circuit, a post-stage voltage conversion circuit, and a signal feedback circuit;
wherein the first voltage conversion circuit is connected to the post-stage voltage conversion circuit, and the signal feedback circuit is connected to the first voltage conversion circuit and the post-stage voltage conversion circuit individually;
wherein the first voltage conversion circuit is configured to convert, in response to a voltage input to the first voltage conversion circuit exceeding a preset voltage range, the voltage input to the first voltage conversion circuit to be within the preset voltage range to thereby obtain a converted voltage, and output the converted voltage to the post-stage voltage conversion circuit;
wherein the post-stage voltage conversion circuit is configured to convert the converted voltage input to the post-stage voltage conversion circuit into a target voltage, and output the target voltage; and
wherein the signal feedback circuit is configured to feed back, based on output of the post-stage voltage conversion circuit, information to the first voltage conversion circuit, to thereby make the first voltage conversion circuit be synchronized with the post-stage voltage conversion circuit.

2. The power supply conversion circuit according to claim 1, further comprising a rectifier circuit, wherein an output end of the rectifier circuit is connected to an input end of the first voltage conversion circuit; and
wherein the rectifier circuit is configured to convert an alternating current (AC) voltage input to the rectifier circuit into a pulsating direct current (DC) voltage, and output the pulsating DC voltage to the first voltage conversion circuit.

3. The power supply conversion circuit according to claim 1, wherein the post-stage voltage conversion circuit comprises a transformer and a second voltage conversion circuit; a primary winding of the transformer is connected to an output end of the first voltage conversion circuit, and a secondary winding of the transformer is connected to an input end of the second voltage conversion circuit;
wherein the transformer is configured to couple the converted voltage, input from the first voltage conversion circuit to the post-stage voltage conversion circuit, from the primary winding to the secondary winding;
wherein the second voltage conversion circuit is configured to convert a voltage output from the secondary winding into the target voltage and output the target voltage.

4. The power supply conversion circuit according to claim 3, wherein the second voltage conversion circuit is specifically configured to receive feedback information of a device to be charged connected to the power supply conversion circuit, and convert the voltage output from the secondary winding into the target voltage based on the feedback information.

5. The power supply conversion circuit according to claim 4, wherein the feedback information comprises at least one selected from the group consisting of charging stage information of the device to be charged, battery level information of the device to be charged, battery temperature of the device to be charged, a charging voltage and a charging current requested by the device to be charged, a voltage adjustment signal, and a current adjustment signal.

6. The power supply conversion circuit according to claim 1, wherein the first voltage conversion circuit comprises a metal-oxide-semiconductor (MOS) transistor as a unidirectional conducting device, and the first voltage conversion circuit further comprises a trigger circuit configured to control on and off of the MOS transistor;
wherein the trigger circuit is specifically configured to control, based on the information fed back by the signal feedback circuit, the MOS transistor to be on or off, to thereby make the first voltage conversion circuit be synchronized with the post-stage voltage conversion circuit.

7. The power supply conversion circuit according to claim 1, further comprising a first capacitor, wherein a first end of the first capacitor is connected to an input end of the first voltage conversion circuit, a second end of the first capacitor is grounded, and the first capacitor is configured to boost the voltage on the input end of the first voltage conversion circuit.

8. The power supply conversion circuit according to claim 3, further comprising a second capacitor, wherein the second capacitor is connected to a node between the secondary winding of the transformer and the second voltage conversion circuit, and the second capacitor is configured to boost a voltage on the input end of the second voltage conversion circuit.

9. The power supply conversion circuit according to any one of claims 1-8, wherein the first voltage conversion circuit comprises a voltage boost converter, the voltage boost converter is configured to convert, in response to a voltage output from a rectifier circuit to the first voltage conversion circuit being less than or equal to a lower limit value of the preset voltage range, the voltage output from the rectifier circuit to the first voltage conversion circuit to be within the preset voltage range to thereby obtain a boosted voltage as the converted voltage, and output the boosted voltage to the post-stage voltage conversion circuit.

10. The power supply conversion circuit according to claim 9, wherein the first voltage conversion circuit further comprises a voltage buck converter, and the voltage buck converter is configured to convert, in response to the voltage output from the rectifier circuit to the first voltage conversion circuit being greater than or equal to an upper limit value of the preset voltage range, the voltage output from the rectifier circuit to the first voltage conversion circuit to be within the preset voltage range to thereby obtain a bucked voltage as the converted voltage, and output the bucked voltage to the post-stage voltage conversion circuit.

11. The power supply conversion circuit according to claim 10, wherein the voltage boost converter and the voltage buck converter are connected in parallel.

12. A charging device, comprising: a power access port, a charging interface, and a power supply conversion circuit;
wherein the power access port is configured to input an AC power;
wherein the power supply conversion circuit comprises: a first voltage conversion circuit, a post-stage voltage conversion circuit, and a signal feedback circuit; the first voltage conversion circuit is connected to the post-stage voltage conversion circuit, and the signal feedback circuit is connected to the first voltage conversion circuit and the post-stage voltage conversion circuit individually;
wherein the first voltage conversion circuit is configured to convert, in response to a voltage input to the first voltage circuit exceeding a preset voltage range, the voltage input to the first voltage conversion circuit to be within the preset voltage range to thereby obtain a converted voltage, and output the converted voltage to the post-stage voltage conversion circuit;
wherein the post-stage voltage conversion circuit is configured to convert the converted voltage input to the post-stage voltage conversion circuit into a target voltage, and output the target voltage;
wherein the signal feedback circuit is configured to feedback, based on output of the post-stage voltage conversion circuit, information to the first voltage conversion circuit, to thereby make the first voltage conversion circuit be synchronized with the post-stage voltage conversion circuit;
wherein the charging interface is configured to output the target voltage output from the post-stage voltage conversion circuit to thereby charge a device to be charged.

13. The charging device according to claim 12, wherein the power supply conversion circuit further comprises a rectifier circuit, and an output end of the rectifier circuit is connected to an input end of the first voltage conversion circuit;
wherein the rectifier circuit is configured to convert an AC voltage input to the rectifier circuit into a pulsating DC voltage, and output the pulsating DC voltage to the first voltage conversion circuit.

14. The charging device according to claim 12, wherein the post-stage voltage conversion circuit comprises a transformer and a second voltage conversion circuit; a primary winding of the transformer is connected to an output end of the first voltage conversion circuit, and a secondary winding of the transformer is connected to an input end of the second voltage conversion circuit;
wherein the transformer is configured to couple the converted voltage, input from the first voltage conversion circuit to the post-stage voltage conversion circuit, from the primary winding to the secondary winding;
wherein the second voltage conversion circuit is configured to convert a voltage output from the secondary winding into the target voltage and output the target voltage.

15. The charging device according to claim 14, wherein the second voltage conversion circuit is specifically configured to receive feedback information of the device to be charged connected to the power supply conversion circuit, and convert the voltage output from the secondary winding into the target voltage based on the feedback information.

16. The charging device according to claim 15, wherein the feedback information comprises at least one selected from the group consisting of charging stage information of the device to be charged, battery level information of the device to be charged, battery temperature of the device to be charged, a charging voltage and a charging current requested by the device to be charged, a voltage adjustment signal, and a current adjustment signal.

17. The charging device according to claim 12, wherein the first voltage conversion circuit comprises a MOS transistor as a unidirectional conducting device, and the first voltage conversion circuit further comprises a trigger circuit configured to control on and off of the MOS transistor;
wherein the trigger circuit is specifically configured to control, based on the information fed back by the signal feedback circuit, the MOS transistor to be on or off, to thereby make the first voltage conversion circuit be synchronized with the post-stage voltage conversion circuit.

18. The charging device according to claim 12, wherein the power supply conversion circuit further comprises a first capacitor, a first end of the first capacitor is connected to an input end of the first voltage conversion circuit, a second end of the first capacitor is grounded, and the first capacitor is configured to boost the voltage on the input end of the first voltage conversion circuit.

19. The charging device according to claim 14, wherein the power supply conversion circuit further comprises a second capacitor, the second capacitor is connected to a node between the secondary winding of the transformer and the second voltage conversion circuit, and the second capacitor is configured to boost a voltage of on the input end of the second voltage conversion circuit.

20. The charging device according to any one of claims 12-19, wherein the first voltage conversion circuit comprises a voltage boost converter, the voltage boost converter is configured to convert, in response to a voltage output from a rectifier circuit to the first voltage conversion circuit being less than or equal to a lower limit value of the preset voltage range, the voltage output from the rectifier circuit to the first voltage conversion circuit to be within the preset voltage range to thereby obtain a boosted voltage as the converted voltage, and output the boosted voltage to the post-stage voltage conversion circuit.

21. The charging device according to claim 20, wherein the first voltage conversion circuit further comprises a voltage buck converter, and the voltage buck converter is configured to convert, in response to the voltage output from the rectifier circuit to the first voltage conversion circuit being greater than or equal to an upper limit value of the preset voltage range, the voltage output from the rectifier circuit to the first voltage conversion circuit to be within the preset voltage range to thereby obtain a bucked voltage as the converted voltage, and output the bucked voltage to the post-stage voltage conversion circuit.

22. The charging device according to claim 21, wherein the voltage boost converter and the voltage buck converter are connected in parallel.
